# EUROPÄISCHE PATENTSCHRIFT

(11) **EP 1 010 363 B1**
(45) Veröffentlichungstag und Bekanntmachung des Hinweises auf die Patenterteilung: **03.03.2004**
(21) Anmeldenummer: 99119604.9
(22) Anmeldetag: 02.10.1999
(51) Int. Cl.: A01D 45/02

(54) **Maschine zum Mähen und Häckseln von Mais und dgl. stengelartigem Erntegut**
Machine for mowing and chopping maize and such stalk crops
Machine pour faucher et hacher le mais et les plantes à tiges similaires

(30) Priorität: 18.11.1998 DE 29820638 U
(43) Veröffentlichungstag der Anmeldung: 21.06.2000
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke, Dr.

(56) Entgegenhaltungen:
- EP-A- 0 508 189
- EP-A- 0 760 200
- DE-A- 2 209 517
- DE-U- 29 613 397
- DE-U- 29 614 549

## Beschreibung

Die Erfindung betrifft eine Maschine zum Mähen und Häckseln von Mais und dgl. stengelartigem Erntegut nach dem Oberbegriff des Anspruchs 1.

Bei solchen Maschinen werden durch die Einzugs- und Mähtrommeln die Stengel des Ernteguts in aufrechter Stellung eingezogen und gemäht und anschließend dem Häcksler durch den das geschnittene Erntegut aufnehmenden Einführungskanal zugeführt. Im Zuge der Rationalisierung des Erntebetriebes werden große selbstfahrende Feldhäcksler mit hohen Leistungen eingesetzt, wobei der Häcksler mit seiner Messertrommel oder dgl. Häckselwerkzeug entsprechend groß dimensioniert ist. Dies erfordert für das Häckselwerkzeug einen in seinen Abmessungen quer zur Fahrtrichtung des Häckslers angepaßt breiten Einführungskanal für das geschnittene Erntegut.

Ein in dieser Weise verbreiteter Einführungskanal erzeugt im Erntebetrieb Schwierigkeiten dadurch, daß die den Einführungskanal seitlich begrenzenden Fördertrommeln das herantransportierte Erntegut hauptsächlich in den mittleren Bereich des Einführungskanals hineinfördern, während die beiden äußeren Bereiche unterversorgt bleiben.

Durch diese ungleichmäßige Zuführung des Erntegutes entsteht einerseits ein ungleichmäßiger Verschleiß des Häckselwerkzeugs, und andererseits können durch die Konzentrierung hoher Materialmassen im mittleren Bereich des Einführungskanals Überlastungen des Häckslers auftreten, die zu einem Ansprechen der üblicherweise vorgesehenen Sicherheitskupplungen und damit zu den Erntebetrieb verzögernden Betriebsunterbrechungen führen.

Versuche, die Beschickung des Einführungskanals mit Erntegut über die gesamte Kanalbreite einfach dadurch zu vergleichmäßigen, daß die seitlichen Fördertrommeln quer zur Fahrtrichtung weiter auseinandergesetzt werden, führen nicht zum Erfolg, da hierdurch eine Befüllung des Einführungskanals und damit der entsprechend breiten Häckseltrommel hauptsächlich in den beiden äußeren, seitlichen Endbereichen des Einführungskanals erreicht wird, während die Kanalmitte in diesem Fall mit Erntegut unterversorgt bleibt. Es entstehen auf diese Weise wiederum ungleichmäßige Verschleißbilder, verbunden mit der Gefahr häufiger Betriebsunterbrechungen wegen Überlastung.

Der Erfindung liegt die Aufgabe zugrunde, eine Maschine der eingangs angegebenen Art zu schaffen, die eine gleichmäßige Versorgung des Einführungskanals des Häckslers, insbesondere eines breiten Einführungskanals eines entsprechend goß dimensionierten leistungsstarken Häckslers, mit dem geschnittenen Erntegut gewährleistet.

Diese Aufgabe wird nach der Erfindung durch eine Ausgestaltung der Maschine gemäß dem kennzeichnenden Teil des Anspruchs 1 gelöst. Dadurch, daß bei dieser Ausgestaltung die beiden seitlichen Fördertrommeln quer zu ihrer Hochachse jeweils in einen oberen und einen unteren Trommelkörper unterteilt sind und die beiden Drehachsen der Trommelkörper jeder Fördertrommel in Querrichtung derart zueinander versetzt sind, daß der obere Trommelkörper in Arbeitsstellung mit seinen Mitnehmerzahnkränzen einen größeren Abstand von der Einführungskanalmitte aufweist als der untere Trommelkörper, wird das Förderverhalten der beiden Fördertrommeln derart beeinflußt, daß das geschnittene Erntegut, insbesondere in Form von Maispflanzen, zuerst von den beiden unteren Trommelkörpern der beiden Fördertrommeln zur Einführungskanalmitte hin sauber gebündelt wird, wobei dem so gebündelten Erntegut durch die nach außen versetzten oberen Trommelkörper der beiden Fördertrommeln die Möglichkeit gegeben wird, sich von der Kanalmitte aus nach außen zu den seitlichen Kanalenden hin weiter auszubreiten. Hierdurch entsteht eine gleichmäßige Befüllung des Einführungskanals, die eine Vergrößerung des Förderquerschnitts und damit einen erhöhten Durchsatz an Erntegut ermöglicht. Das Häckselwerkzeug wird dadurch nicht mehr ungleichmäßig beansprucht, und es entsteht ein gleichförmiges Verschleißbild, das eine lange Lebensdauer der Arbeitsteile des Häckslers begünstigt, wie auch Betriebsunterbrechungen wegen Überlastung der Maschine durch unerwünschte Zusammenballungen des Ernteguts in Bereichen des Einführungskanals zum Häcksler vermieden werden.

Vorteilhaft kann das Förderverhalten der beiden seitlichen Fördertrommeln dadurch weiter günstig beeinflußt werden, daß die beiden Trommelkörper jeder Fördertrommel mit gleichen Umfangsgeschwindigkeiten angetrieben werden. Hierdurch wird ein gleichmäßiger Materialfluß im Bereich des Einführungskanals aufrecht erhalten.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigt:
- Fig. 1: eine Draufsicht auf eine Maschine zum Mähen von Mais und dgl. stengelartigem Erntegut als Vorsatz-bzw. Anbaugerät für einen selbstfahrenden Feldhäcksler,
- Fig. 2: eine Seitenansicht der Mähmaschine nach Fig. 1 im an einen Feldhäcksler frontseitig angebauten, eine Mäh- und Häckseleinheit bildenden Zustand,
- Fig. 3: eine Vorderansicht des an den Einführungskanal des Häckslers angrenzenden Bereichs der Mähmaschine in vergrößertem Maßstab,
- Fig. 4: eine Draufsicht auf den Maschinenbereich gemäß Fig. 3,
- Fig. 5: eine Draufsicht auf die Fördertrommeln des Maschinenbereichs gemäß Fig. 4, zur Veranschaulichung einer abgewandelten Ausführungsform, und
- Fig. 6: eine Ansicht des Antriebssytems der beiden Fördertrommeln in perspektivischer Explosivdarstellung.

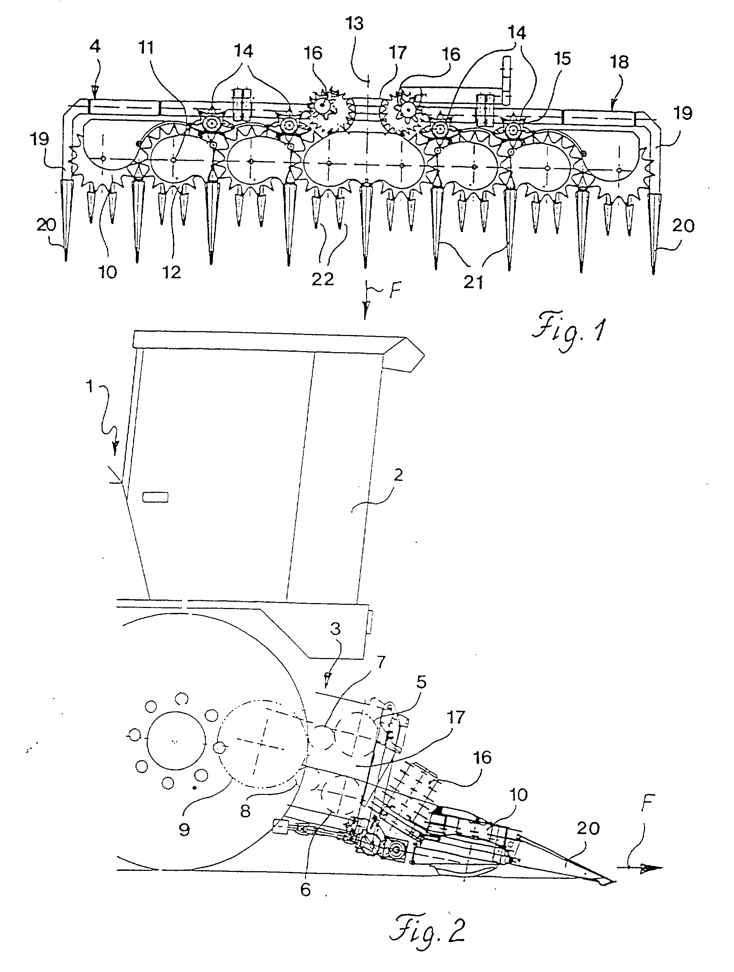

Wie sich zunächst aus den Fig. 1 und 2 der Zeichnung ergibt, umfaßt eine als Ganzes mit 1 bezeichnete Maschine zum Mähen und Häckseln von Mais und dgl. stengelartigem Erntegut einen Feldhäcksler in Form eines selbstfahrenden Fahrzeugs 2 mit einem Häcksler 3 und eine als Ganzes mit 4 bezeichnete Mähmaschine zum reihenunabhängigen Mähen des Erntegutes als Mähvorsatz in Form eines Anbaugerätes für das nach Art eines Schleppers ausgebildete Fahrzeug 2.

Der Häcksler 3 ist in bezug auf die Mähmaschine 4 mittig angeordnet und besitzt ein Paar vorderer Einschubwalzen 5 und 6 und ein Paar hinterer Vorpreßwalzen 7 und 8, zwischen denen das gemähte Erntegut dem nur mit einer Messer- oder Häckseltrommel 9 dargestellten Häckselgebläse zugeführt wird, in dem es zerkleinert und über ein Ausblasrohr z.B. auf einen landwirtschaftlichen Ladewagen gefördert wird.

Die gemäß Fig. 1 vom Fahrzeug 2 in Arbeits- bzw. Fahrtrichtung gemäß dem Pfeil F vorbewegte Mähmaschine 4 umfaßt bei dem dargestellten Beispiel insgesamt acht Einzugs- und Mähtrommeln 10, die im Betrieb um eine Hochachse 11 rotieren und mit abstehenden Mitnehmerzahnkränzen 12 versehen sind. Die Einzugs- und Mähtrommeln 10 sind in Querausrichtung beidseits der vertikalen Längsmittelebene 13 der Maschine 4 dem Häcksler 3 mittig vorgeordnet. In Fahrtrichtung F hinter den Einzugs- und Mähtrommeln 10 sind zur Unterstützung der Förderbewegung des geschnittenen Ernteguts zum Häcksler 3 hin außerdem Querfördertrommeln 14 vorgesehen, die im Betrieb ihrerseits um eine Hochachse rotieren und mit abstehenden Mitnehmerzahnkränzen 15 versehen sind.

Ebenfalls in Fahrtrichtung F hinter den Einzugs- und Mähtrommeln 10 befinden sich zwei weitere Fördertrommeln 16, die im Nahbereich der Einschubwalzen 5, 6 des Häckslers 3 angeordnet sind und einen Einführungskanal 17 für das Erntegut zwischen den mit Abstand übereinander angeordneten Einschubwalzen 5, 6 seitlich begrenzen. Wie insbesondere aus Fig. 2 ersichtlich ist, sind die beiden Fördertrommeln 16 als in Fahrtrichtung F nach vorn geneigte Schrägfördertrommeln ausgebildet, die einen vertikalen Abstand zwischen der Arbeitsebene der Einzugs- und Mähtrommeln 10 und der horizontalen Ebene des Einführungskanals 17 überbrücken und eine Anordnung und Ausgestaltung zur Übernahme des Ernteguts von den Einzugs- und Mähtrommeln 10 und zu dessen Einspeisung in den Einführungskanal 17 aufweisen.

Die Einzugs- und Mähtrommeln 10 einschl. der Fördertrommeln 14 und 16 sind von einem an der Vorderseite, in Fahrtrichtung F, offenen Maschinenrahmen 18 seitlich und rückseitig umgeben und abgestützt. Der Maschinenrahmen 18 umfaßt seitliche Führungen 19, die zusammen die Arbeitsbreite der Maschine 4 bestimmen. Die seitlichen Führungen 19 laufen vorn jeweils in einer Teilerspitze 20 aus, die als Blattheber für das Erntegut wirken und den Mähschnitt vorbereiten. Innerhalb der Arbeitsbreite der Maschine 4 sind weitere Teilerspitzen 21 von gleicher Länge wie die Teilerspitzen 20 und zwischen ihnen kürzere Teilerspitzen 22 angeordnet, die in nicht näher dargestellter Weise unterseitig am Maschinenrahmen 18 befestigt sind.

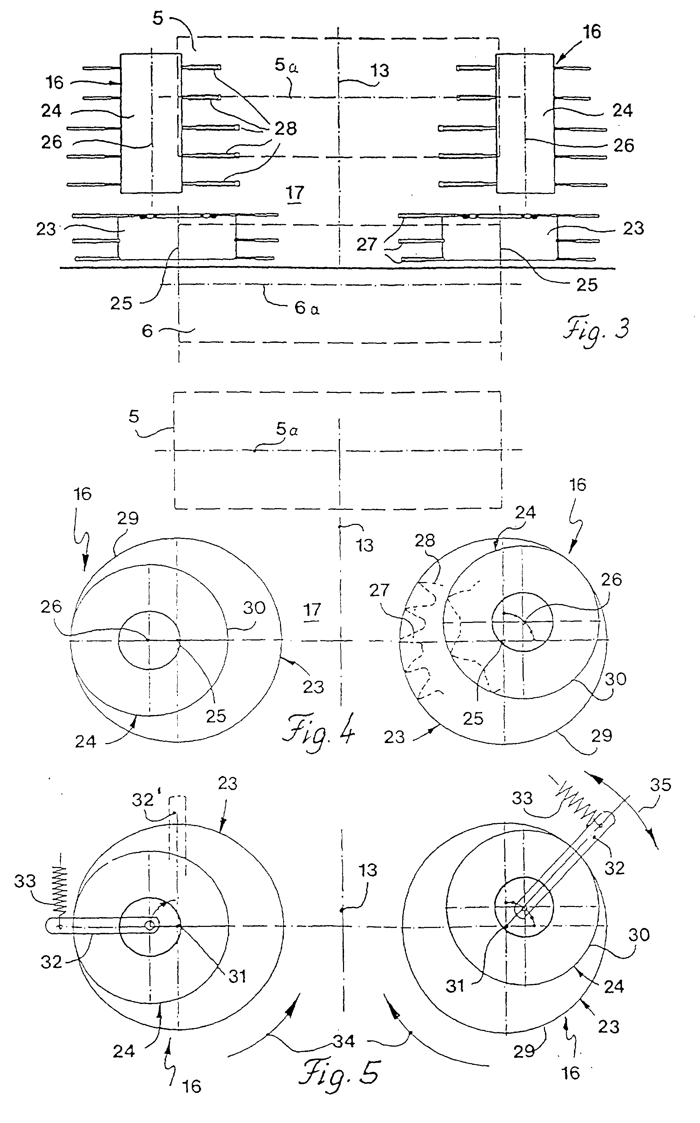

Es sei nun auf die Fig. 3 und 4 verwiesen, in denen der den Einführungskanal 17 für das geschnittene Erntegut definierende Maschinenbereich, rein schematisch, in vergrößertem Maßstab dargestellt ist. Die obere und untere Einschubwalze 5, 6, die im Betrieb jeweils um eine horizontale Drehachse 5a bzw. 6a umlaufen, sind dabei nur gestrichelt angedeutet. Ersichtlich sind die den Förderkanal 17 seitlich begrenzenden Fördertrommeln 16 quer zu ihrer Hochachse jeweils in einen unteren Trommelkörper 23 und einen oberen Trommelkörper 24, jeweils mit einer eigenen, die Hochachse definierenden Drehachse 25 bzw. 26, unterteilt.

Wie Fig. 3 und 4 ferner zeigen, sind die beiden Trommelkörper 23, 24 jeder Fördertrommel 16 in der dargestellten Betriebsstellung quer zur vertikalen Längsmittelebene 13 der Maschine 4 derart zueinander versetzt, daß der obere Trommelkörper 24 einen größeren Abstand von der mit der vertikalen Längsmittelebene 13 zusammenfallenden mittleren Ebene des Einführungskanals 17 als der untere Trommelkörper 23 einnimmt. Hierdurch ist der Einführungskanal 17 zu den Einschubwalzen 5, 6 hin im unteren Bereich verengt und demgegenüber im oberen Bereich erweitert.

Die Höhe des oberen Trommelkörpers 24 kann dabei etwa das Dreifache der Höhe des unteren Trommelkörpers 23 betragen, während der Durchmesser des oberen Trommelkörpers 24 nur etwa die Hälfte des Durchmessers des unteren Trommelkörpers 23 beträgt.

Die Fördertrommeln 16 sind, wie die Einzugs- und Mähtrommeln 10 sowie die Querfördertrommeln 14, mit Mitnehmerzahnkränzen 27 und 28 zur Fortbewegung des geschnittenen Erntegutes versehen, von denen die Mitnehmerzahnkränze 27 an den unteren Trommelkörpern 23 und die Mitnehmerzahnkränze 28, jeweils mit vertikalem Abstand, an den oberen Trommelkörpern 24 befestigt sind. Der Durchmesser des Kopfkreises 29 der Mitnehmerzahnkränze 27 der unteren Trommelkörper 23 beträgt bei dem dargestellten Beispiel etwa das 1,2- bis 1,6-fache des Durchmessers des Kopfkreises 30 der Mitnehmerzahnkränze 28 des oberen Trommelkörpers 24, die im übrigen, wie in Fig. 3 dargestellt, ein gestaffeltes, nach oben kleiner werdendes Kopfkreisdurchmessermaß aufweisen können.

Die Anordnung und Bemessung der beiden Trommelkörper 23, 24 mit ihren Mitnehmerzahnkränzen 27, 28 ist hierbei derart gewählt, daß die Kopfkreise 29, 30 ihrer Mitnehmerzahnkränze 27, 28 einen Querversatz nur in ihrem der Förderkanalmitte zugewandten Bereich aufweisen, während sie in ihrem von der Förderkanalmitte abgewandten Bereich im wesentlichen zusammenfallen. Dies gewährleistet ein ordnungsgemäßes Zusammenwirken der Mitnehmerzahnkränze 27, 28 mit den normal, d.h. ohne Versatz, ausgeführten Mitnehmerzahnkränzen 15 der Querfördertrommeln 14.

Eine Maximalstellung des Querversatzes der oberen Trommelkörper 24 ist insbesondere aus der in Fig. 4 linken Fördertrommel 16 ersichtlich. Hierbei liegen ihre Drehachsen 26 und die beiden Drehachsen 25 der unteren Trommelkörper 23 in einer gemeinsamen Querebene in bezug auf die Förderkanalmitte bzw. die vertikale Längsmittelebene 13 der Maschine. Es kann sich hierbei um eine feste Einstellung handeln, die im Betrieb nicht verändert wird. Eine weitere feste, im Betrieb nicht veränderliche Einstellung der oberen Trommelkörper 24 in bezug auf die unteren, ihrerseits ortsfesten Trommelkörper 23 ist für die in Fig. 4 rechte Fördertrommel 16 dargestellt. Hiernach ist eine Verschwenkung des oberen Trommelkörpers 24 um eine mit der Drehachse 25 des unteren Trommelkörpers 23 zusammenfallende Achse in von der vertikalen Längsmittelebene 13 fortweisender Richtung, d.h. nach außen, zur Anpassung an eine gegebene Breite des Einführungskanals 17 vorgenommen worden und maschinenseitig fixiert.

Weitere Variations- und Anpassungsmöglichkeiten bietet jedoch eine Ausgestaltung gemäß Fig. 5, bei der der untere Trommelkörper 23 ortsfest und der obere Trommelkörper 24 durch das herantransportierte Erntegut aus einer Grundstellung entgegen Federkraft nach außen um den hier mit 31 bezeichneten Drehpunkt, der mit der Drehachse 25 des unteren Trommelkörpers 23 zusammenfällt, verschwenkbar abgestützt ist. Hierdurch ist insbesondere eine Anpassung der Betriebsstellung der oberen Trommelkörper 24 an unterschiedliche Futtergutströme im Betrieb möglich.

Für seine Verschwenkung entgegen Federkraft ist der obere Trommelkörper 24 gemäß der Darstellung in Fig. 5 mit einem Hebel 32 versehen, an dessen radial äußerem Ende eine Zugfeder 33 angreift, deren anderes Ende in nicht näher dargestellter Weise maschinenfest gehalten ist. Die Verschwenkbarkeit des oberen Trommelkörpers 24 gegenüber dem unteren Trommelkörper 23 unter dem Druck des seitlich in den Einführungskanal 17 entsprechend den Bewegungspfeilen 34 eingeförderten Erntegutstroms aus einer bei der in Fig. 5 linken Fördertrommel 16 durch das Hebelende 32' strichpunktiert veranschaulichten Grundstellung von der Längsmittelebene 13 fort nach außen um den Drehpunkt 31 reicht bis zu der in Fig. 5 für die linke Fördertrommel 16 dargestellten Maximalstellung, die derjenigen nach Fig. 4 (linke Fördertrommel 16) entspricht.

Bei der in Fig. 5 rechten Fördertrommel 16 ist der obere Trommelkörper 24 als ein weiteres Beispiel in einer um 45° aus der Grundstellung nach außen gegenüber dem unteren Trommelkörper 23 um die Drehachse 31 entsprechend der Breite des Einführungskanals 17 verschwenkt dargestellt. Der Verschwenkungswinkel kann durch Anschläge entsprechend der Breite des Einführungskanals 17 begrenzt sein. Der eingezeichnete Doppelpfeil 35 versinnbildlicht das Verschwenken des Trommelkörpers 24 unter dem Druck des Erntegutstroms nach außen und das bei Aufhebung des Drucks des Erntegutstroms erfolgende Zurückschwenken nach innen, zur Einführungskanalmitte hin, durch die in ihre Ausgangslage zurückkehrende gespannte Zugfeder 33.

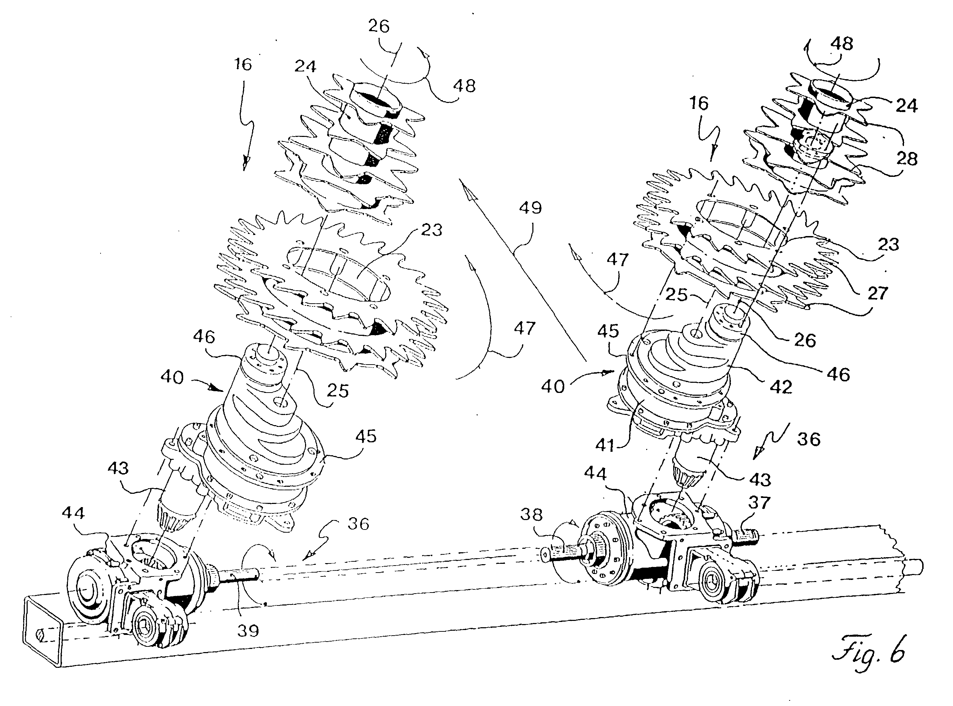

Die beiden Trommelkörper 23 und 24 jeder Fördertrommel 16 sind in einer gemeinsamen, von der Hauptantriebswelle des Häckslers 3 antreibbaren Getriebeeinheit 36 drehbar abgestützt, die in Fig. 6 dargestellt ist. Der Antrieb der in Fig. 6 rechten Getriebeeinheit 36 erfolgt über einen Anschlußzapfen 37, mit dem in an sich bekannter Weise eine Antriebsverbindung mit dem Zentralgetriebe des Häckslers 3 hergestellt werden kann. Die in Fig. 6 dargestellten beiden Getriebeeinheiten 36 sind im wesentlichen identisch ausgebildet. Es erfolgt eine Antriebsverbindung von einem Anschlußzapfen 38 der in Fig. 6 rechten Getriebeeinheit 36 durch eine Verbindungswelle auf einen Anschlußzapfen 39 der in Fig. 6 linken Getriebeeinheit 36.

Der Querversatz der beiden Trommelkörper 23, 24 wird durch ein in die Getriebeeinheit 36 integriertes Verlagerungsgetriebe 40 erreicht, das ein unteres Stirnradgetriebe 41 und ein oberes Stirnradgetriebe 42 umfaßt, die mit ihren Getriebegliedern die beiden Drehachsen 25 und 26 der beiden Trommelkörper 23 und 24 definieren. Dabei ist das Verlagerungsgetriebe 40 zugleich als Übersetzungsgetriebe ausgebildet, derart, daß dem unteren Trommelkörper 23 und dem oberen Trommelkörper 24 im Betrieb gleiche Umfangsgeschwindigkeiten ihrer Mitnehmerzahnkränze 27, 28 vermittelt werden.

Das Verlagerungsgetriebe 40 ist mit einem Anschlußzapfen 43 in ein den Anschlußzapfen 37 bzw. 39 aufweisendes Anschlußgetriebe 44 für eine Antriebsübertragung eingesetzt und umfaßt im übrigen einen Befestigungsflansch 45 für eine Schraubverbindung mit dem unteren Trommelkörper 23 sowie einen Befestigungsflansch 46 für eine Schraubverbindung mit dem oberen Trommelkörper 24, wie dies in Fig. 6 in strichpunktierten Linien veranschaulicht ist. Die Drehrichtungen der beiden Trommelkörper 23 und 24 sind durch Umlaufpfeile 47 und 48 angedeutet, während der Einführungskanal 17 durch einen Bewegungspfeil 49 kenntlich gemacht ist.

## Patentansprüche

1. Maschine zum Mähen und Häckseln von Mais und dgl. stengelartigem Erntegut mit einer Anzahl von um eine Hochachse rotierenden, mit abstehenden Mitnehmerzahnkränzen versehenen Einzugs- und Mähtrommeln, die in Querausrichtung beidseits der vertikalen Längsmittelebene der Maschine einem Häcksler mit einem das geschnittene Erntegut aufnehmenden Einführungskanal mittig vorgeordnet sind, der ober- und unterseitig von zwei mit einem Höhenabstand voneinander angeordneten Einschubwalzen und seitlich von zwei querbeabstandeten, das geschnittene Erntegut herantransportierenden, ihrerseits um eine Hochachse rotierenden Fördertrommeln begrenzt ist, **dadurch gekennzeichnet, daß** jede der beiden seitlichen Fördertrommeln (16) quer zu ihrer Hochachse in einen unteren und einen oberen Trommelkörper (23,24), jeweils mit eigener Drehachse (25,26), unterteilt ist und die beiden Drehachsen (25,26) der Trommelkörper (23, 24) in Querrichtung derart zueinander versetzt sind, daß der obere Trommelkörper (24) in eine Arbeitsstellung verbringbar ist, in der der Kopfkreis (30) seiner Mitnehmerzahnkränze (28) einen größeren Abstand von der mit der vertikalen Längsmittelebene (13) der Maschine (4) zusammenfallenden Einführungskanalmitte als der Kopfkreis (29) der Mitnehmerzahnkränze (27) des unteren Trommelkörpers (23) einnimmt.

2. Maschine nach Anspruch 1, **dadurch gekennzeichnet, daß** die Höhe des oberen. Trommelkörpers (24) etwa das Dreifache der Höhe des unteren Trommelkörpers (23) beträgt.

3. Maschine nach Anspruch 1 oder 2, **dadurch gekennzeichnet, daß** der Durchmesser des oberen Trommelkörpers (24) etwa die Hälfte des Durchmessers des unteren Trommelkörpers (23) beträgt.

4. Maschine nach einem der Ansprüche 1 bis 3, **dadurch gekennzeichnet, daß** der Kopfkreisdurchmesser der Mitnehmerzahnkränze (27) des unteren Trommelkörpers (23) etwa das 1,2- bis 1,6-fache des Kopfkreisdurchmessers der Mitnehmerzahnkränze (28) des oberen Trommelkörpers (24) beträgt.

5. Maschine nach Anspruch 4, dadurch gekennzeichent, daß die beiden Trommelkörper (23, 24) derart querversetzt sind, daß die Kopfkreise (29, 30) ihrer Mitnehmerzahnkränze (27, 28) in Arbeitsstellung einen Querversatz nur in ihrem der Förderkanalmitte zugewandten Bereich aufweisen, während sie in ihrem von der Förderkanalmitte abgewandten Bereich im wesentlichen zusammenfallen.

6. Maschine nach einem der Ansprüche 1 bis 5, **dadurch gekennzeichnet, daß** die beiden oberen Trommelkörper (24) ihren größten Abstand von der Einführungskanalmitte in einer Stellung einnehmen, in der ihre Drehachsen (26) und die beiden Drehachsen (25) der unteren Trommelkörper (23) in einer gemeinsamen Querebene in bezug auf die Einführungskanalmitte enthalten sind.

7. Maschine nach einem der Ansprüche 1 bis 6, **dadurch gekennzeichnet, daß** der untere Trommelkörper (23) ortsfest und der obere Trommelkörper (24) durch das herantransportierte Erntegut aus einer Grundstellung entgegen Federkraft zu den Einschubwalzen (5, 6) hin um einen mit der Drehachse (25) des unteren Trommelkörpers (23) zusammenfallenden Drehpunkt (31) verschwenkbar abgestützt ist.

8. Maschine nach Anspruch 7, **dadurch gekennzeichnet, daß** die Verschwenkbarkeit des oberen Trommelkörpers (24) gegenüber dem unteren Trommelkörper (23) auf einen Winkel < 180°, vorzugsweise 90°, begrenzt ist.

9. Maschine nach einem der Ansprüche 1 bis 8, **dadurch gekennzeichnet, daß** die beiden Trommelkörper (23, 24) in einer gemeinsamen, von der Hauptantriebswelle der Maschine antreibbaren Getriebeeinheit (40) drehbar abgestützt sind.

10. Maschine nach Anspruch 9, **dadurch gekennzeichnet, daß** die Getriebeeinheit (40) ein den Querversatz der beiden Trommelkörper (23, 24) mit ihren Drehachsen (25, 26) definierendes Verlagerungsgetriebe (40) umfaßt.

11. Maschine nach Anspruch 10, **dadurch gekennzeichnet, daß** die beiden Trommelkörper (23, 24) über das Verlagerungsgetriebe (40) mit gleichen Umfangsgeschwindigkeiten antreibbar sind.

12. Maschine nach einem der Ansprüche 1 bis 11, **dadurch gekennzeichnet, daß** die beiden Fördertrommeln (16) als einen vertikalen Abstand zwischen der Arbeitsebene der Einzugs- und Mähtrommeln (10) und der horizontalen Einführungskanalebene überbrückende Schrägfördertrommeln in einer Anordnung und Ausgestaltung zur Übernahme des Ernteguts von den Einzugs- und Mähtrommeln (10) und zu dessen Einspeisung in den Einführungskanal (17) ausgebildet sind.

## Claims

1. A machine for mowing and chopping maize and like stalk crops with a plurality of drawing-in and mowing drums rotating about an upright axis and provided with projecting toothed entraining crowns, the drums being arranged centrally in front of a chopper with an infeed channel receiving the cut harvested crop, on the two sides in the transverse direction of the vertical, longitudinal central plane of the machine, the infeed channel being bounded above and below by two insertion rollers arranged with a vertical spacing between them and at the sides by two transversely spaced conveyor drums which transport the cut harvested crop onwardly and for their part rotate about an upright axis, **characterized in that** each of the two side conveyor drums (16) is divided transversely to its upright axis into a lower and an upper drum body (23, 24), each with its own axis of rotation (25, 26), and the two axes of rotation (25, 26) of the drum bodies (23, 24) are so offset from one another in the transverse direction that the upper drum body (24) can be brought into a working position in which the tip circle (30) of its toothed entraining crown (28) has a greater distance from the centre of the infeed channel coinciding with the vertical longitudinal central plane (13) of the machine (4) than the tip circle (29) of the toothed entraining crown (27) of the lower drum body (23).

2. A machine according to claim 1, **characterized in that** the height of the upper drum body (24) amounts to about three times the height of the lower drum body (23)

3. A machine according to claim 1 or 2, **characterized in that** the diameter of the upper drum body (24) amounts to about half the diameter of the lower drum body (23).

4. A machine according to any of claims 1 to 3, **characterized in that** the tip circle diameter of the toothed entraining crown (27) of the lower drum body (23) amounts to about 1.2 to 1.6 times the tip circle diameter of the toothed entraining crown (28) of the upper drum body (24).

5. A machine according to claim 4, **characterized in that** the two drum bodies (23, 24) are so offset transversely that the tip circles (29, 30) of their toothed entraining crowns (27, 28) in the working position have a transverse offset only in their region facing the conveyor channel centre, while they substantially coincide in their region remote from the conveyor channel centre.

6. A machine according to any of claims 1 to 5, **characterized in that** the two upper drum bodies (24) assume their greatest spacing from the infeed channel centre in a position in which their axes of rotation and the two axes of rotation (25) of the lower drum bodies (23) are contained in a common transverse plane relative to the introduction channel centre.

7. A machine according to any of claims 1 to 6, **characterized in that** the lower drum body (23) is positionally fixed and the upper drum body (24) is pivotally supported to be moved against spring force by the crop transported thereby out of a datum position towards the insertion rollers (5, 6), about a point of rotation coinciding with the axis of rotation (25) of the lower drum body (23).

8. A machine according to claim 7, **characterized in that** the ability to pivot of the upper drum body (24) relative to the lower drum body (23) is limited to an angle < 180°, preferably 90°.

9. A machine according to any of claims 1 to 8, **characterized in that** the two drum bodies (23, 24) are rotatably supported in a common transmission unit (40) which can be driven from the main drive shaft of the machine.

10. A machine according to claim 9, according to the transmission unit (40) comprises a displacement transmission (40) defining the transverse offset of the two drum bodies (23, 24) with their axes of rotation (25, 26).

11. A machine according to claim 10, **characterized in that** the two drum bodies (23, 24) can be driven with equal peripheral speeds through the displacement transmission (40).

12. A machine according to any of claims 1 to 11, **characterized in that** the two conveyor drums (16) are formed as inclined conveyor drums bridging over a vertical spacing between the working plane of the drawing-in and mowing drums (10) and the horizontal infeed channel plane and an arrangement and formation for accepting the harvested crop from the drawing-in and mowing drums (10) and for feeding it into the infeed channel (17).

## Revendications

1. Machine pour faucher et hacher le maïs et une matière à récolter analogue sous forme de tiges, comportant un certain nombre de tambours d'entrée et de fauchage, qui tournent autour d'un axe vertical et sont pourvus de couronnes dentées d'entraînement saillantes et qui sont disposés, dans la direction transversale des deux côtés du plan médian longitudinal vertical de la machine, en position centrée en avant d'une hacheuse avec un canal d'introduction recevant la matière à récolter coupée, et qui est limitée à sa partie supérieure et à sa partie inférieure par deux tambours d'insertion, qui sont disposés à une certaine distance réciproque en hauteur et latéralement par deux tambours d'entraînement qui sont distants transversalement, amènent la matière à récolter coupée et peuvent tourner pour leur part autour d'un axe vertical, **caractérisée en ce que** chacun des deux tambours d'entraînement latéraux (16) est divisé, transversalement par rapport à son axe vertical, en un corps inférieur et un corps supérieur en forme de tambour (23, 24), possédant respectivement un axe de rotation propre (25, 26), et les deux axes de rotation (25, 26) des corps en forme de tambour (23, 24) sont décalés l'un par rapport à l'autre dans la direction transversale de telle sorte que le corps supérieur en forme de tambour (24) peut être amené dans une position de travail, dans laquelle le cercle primitif (30) de ces couronnes dentée d'entraînement (28) se place à une distance accrue du centre du canal d'introduction, qui coïncide avec le plan médian longitudinal vertical (13) de la machine (4), en tant que cercle primitif (22) des couronnes dentées d'entraînement (27) du corps inférieur en forme de tambour (23).

2. Machine selon la revendication 1, **caractérisée en ce que** la hauteur du corps supérieur en forme de tambour (24) est égale approximativement au triple de la hauteur du corps inférieur en forme de tambour (23).

3. Machine selon la revendication 1 ou 2, **caractérisée en ce que** le diamètre du corps supérieur en forme de tambour (24) est égal approximativement à la moitié du diamètre du corps inférieur en forme de tambour (23).

4. Machine selon l'une des revendications 1 à 3, **caractérisée en ce que** le diamètre primitif des couronnes dentées d'entraînement (27) du corps inférieur en forme de tambour (23) est compris approximativement entre 1,2 et 1,6 fois du diamètre primitif des couronnes dentées d'entraînement (28) du corps supérieur en forme de tambour (24).

5. Machine selon la revendication 4, **caractérisée en ce que** les deux corps en forme de tambour (23, 24) sont décalés transversalement de telle sorte que les cercles primitifs (29, 30) de leurs couronnes dentées d'entraînement (27, 28) possèdent, dans la position de travail, un décalage transversal uniquement dans leur zone tournée vers le centre du canal d'entraînement, tandis qu'elles coïncident essentiellement dans leur partie tournée à l'opposé du centre du canal d'entraînement.

6. Machine selon l'une des revendications 1 à 5, **caractérisée en ce que** les deux corps supérieurs en forme de tambour (24) atteignent leur distance maximale du centre du canal d'introduction dans une position dans laquelle leurs axes de rotation (26) et les deux axes de rotation (25) des corps inférieurs en forme de tambour (25) sont situés dans un plan transversal commun par rapport au centre du canal d'introduction.

7. Machine selon l'une des revendications 1 à 6, **caractérisée en ce que** le corps inférieur en forme de tambour (23) est monté fixe et le corps supérieur en forme de tambour (22) est supporté au moyen de la matière à récolter amenée, de manière à pouvoir pivoter depuis une position de base à l'encontre de la force d'un ressort dirigé vers les cylindres d'entrée (5, 6), autour d'un centre de rotation (31) qui coïncide avec l'axe de rotation (25) du corps inférieur en forme de tambour (23).

8. Machine selon la revendication 7, **caractérisée en ce que** la capacité de pivotement du corps supérieur en forme de tambour (24) par rapport au corps inférieur en forme de tambour (23) est limitée à un angle < 280°, de préférence 90°.

9. Machine selon l'une des revendications 1 à 8, **caractérisée en ce que** les deux corps en forme de tambour (23, 24) sont supportés de manière à pouvoir tourner dans une unité commune de transmission (40) pouvant être entraînée par l'arbre d'entraînement principal de la machine.

10. Machine selon la revendication 9, **caractérisée en ce que** l'unité de transmission (40) comprend une transmission à décalage (40) qui définit le décalage transversal des deux corps en forme de tambour (23, 24) avec leurs axes de rotation (25, 26).

11. Machine selon la revendication 10, **caractérisée en ce que** les deux corps en forme de tambour (23, 24) peuvent être entraînés au moyen de la transmission à décalage (4) avec les mêmes vitesses circonférentielles.

12. Machine selon les revendications 1 à 11, **caractérisée en ce que** les tambours d'entraînement (16) sont agencés sous la forme de tambours d'entraînement obliques, qui comblent une distance verticale entre le plan de travail des tambours d'entrée et de fauchage et le plan horizontal du canal d'introduction, dans une disposition et avec un agencement permettant le transfert de la matière à récolter depuis les tambours d'entrée et de fauchage (10) et pour l'introduction de cette manière dans le canal d'introduction (17).
